(19) Europäisches Patentamt / European Patent Office / Office européen des brevets

(11) **EP 4 387 227 A1**

(12) **EUROPEAN PATENT APPLICATION**

(43) Date of publication:
**19.06.2024 Bulletin 2024/25**

(21) Application number: **22214387.7**

(22) Date of filing: **16.12.2022**

(51) International Patent Classification (IPC):
**H04N 19/30** $^{(2014.01)}$   **H04N 21/81** $^{(2011.01)}$
**H04N 21/2343** $^{(2011.01)}$   **H04N 21/218** $^{(2011.01)}$
**H04N 21/6379** $^{(2011.01)}$   **G06N 3/045** $^{(2023.01)}$

(52) Cooperative Patent Classification (CPC):
**H04N 19/30; G06N 3/045; G06N 3/084;
H04N 21/21805; H04N 21/234327; H04N 21/6379;
H04N 21/816**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.
5656 AG Eindhoven (NL)**

(72) Inventors:
- **KROON, Bart**
  **5656 AG Eindhoven (NL)**
- **VAREKAMP, Christiaan**
  **5656 AG Eindhoven (NL)**

(74) Representative: **Philips Intellectual Property &
Standards
High Tech Campus 52
5656 AG Eindhoven (NL)**

(54) **ENCODING AND DECODING VIDEO SIGNALS**

(57)   A method for encoding a video signal. The method comprises receiving encoding instructions for encoding the video signal and encoding the video signal using a training loop for optimizing a metric of the encoded video signal, wherein the training loop comprises a loss function and one or more of a neural encoder and a neural decoder. The training loop is adapted based on the encoding instructions.

Fig.13

**Description**

FIELD OF THE INVENTION

The invention relates to the field of video coding. In particular, the invention related to the field of layered video encoding.

BACKGROUND OF THE INVENTION

Generalizing, a video may be shot for different applications such as human analysis, machine analysis, archives, entertainment, security or legal affairs. These applications have different requirements relating to distortion, realism, number of viewpoints, level of immersion, bitrate, error resilience etc. Additionally, playback of the video may happen on different classes of devices with different capabilities. As such, video coding methods which incorporate multiple uses have been sought.

One such method is to have a separate bitstream for each use. However, having a separate video bitstream for each use is expensive in terms of required encoder hardware, power consumption, and bitrate.

Another such method is to have a single bitstream compromising multiple uses (e.g., increasing distortion to lower bitrate). However, having a single bitstream to compromise multiple uses often leads to unsatisfactory results.

Thus, there is a need for an improved video coding process which incorporates multiple uses.

SUMMARY OF THE INVENTION

The invention is defined by the claims.

According to examples in accordance with an aspect of the invention, there is provided a method for encoding a video signal, the method comprising:

receiving encoding instructions for encoding the video signal;
encoding the video signal using a training loop for optimizing a metric of the encoded video signal, wherein the training loop comprises a loss function and one or more of a neural encoder and a neural decoder; and
adapting the training loop based on the encoding instructions.

The training loop may comprise a loss function and a neural decoder. The training loop may also comprise a neural encoder.

Receiving the encoding instructions enables an encoder to optimize a metric as required by the encoding instructions. Thus, the client can request how (and thus, for what use) the video signal is encoded.

Neural coding comprises applying a neural encoder to a layer to obtain a latent representation (i.e., the encoded layer) and applying a neural decoder to the latent representation to obtain a reconstruction of the layer.

For neural coding, the loss function is used on the reconstruction, in a loss loop, to attempt to optimize a metric (e.g., distortion, rate, quality etc.). In other words, the loss functions approximate the optimal decoding coefficients for the neural decoder (i.e., the decoding coefficients which attempt to optimize the metrics).

Note that "optimizing a metric" will be understood as "attempting to optimize a metric" as the optimizing will generally be limited by time and processing resources.

For neural coding, the decoding parameters will generally contain any information needed by the neural decoder to decode the latent representation that is not already available to the decoder.

Encoding using neural coding may be based on applying a neural encoder to the layer to obtain an encoded layer, applying a neural decoder to the encoded layer to obtain a reconstruction and applying the loss function to the reconstruction and, optionally, based on the original layer (e.g., for distortion).

The encoding instructions may comprise the metric for the training loop to optimize. The particular metrics used for each layer will, of course, depend on the particular use-case and which optimized metrics are desired for each of the layers.

Thus, the client can specify what metric to optimize when encoding the video signal instead of relying on the encoding scheme utilized by the encoder.

The method may further comprise adapting the loss function based on the metric specified in the encoding instructions or selecting a loss function based on the metric.

The encoding instructions may comprise structure information of the neural decoder and/or the neural encoder.

Specifying the structure information for the neural encoder/decoder enables can indirectly affect a metric of interest. For example, adapting the structure of a neural encoder may affect the bitrate at which the video signal (e.g., by lowering the dimensionality of the latent representation (i.e., the encoded video signal).

The training loop may comprise the neural decoder and the encoding instructions comprises decoder coefficients for the neural decoder.

The received decoder coefficients may correspond to a metric of interest.

The training loop may comprise the neural encoder and the encoding instructions may comprise encoder coefficients for the neural encoder.

The received encoder coefficients may correspond to a metric of interest.

The encoding instructions may comprise tunable control parameters for the loss function.

The received tunable control parameters may correspond to a metric of interest.

The metric may comprise one of a realism measure, a distortion measure, a color accuracy measure, a rate measure or an object detection accuracy measure.

The video signal may be a layered video signal with a first layer and a second layer, where the second layer is dependent on the first layer, and encoding the video signal comprises encoding the first layer and the second layer, wherein at least one of the first layer and the second layer are encoded using neural coding, and the first layer is encoded using a first loss function for optimizing a first metric and the second layer is encoded using a second, different, loss function for optimizing a second metric.

The invention also provides a method for decoding an encoded video signal, the method comprising:

transmitting encoding instructions to an encoder;
receiving the encoded video signal, encoded based on the encoding instructions and a training loop comprising a neural decoder;
receiving decoding parameters for decoding the encoded video signal; and
decoding the encoded video signal using the neural decoder and the decoding parameters.

The decoding parameter may comprise decoding coefficients used by a decoder (e.g., a neural decoder) to decode the encoded first layer, encoding coefficients used by an encoder (e.g., a neural encoder) to encode the first layer, a reconstruction of the first layer and/or the encoded first layer (e.g., the latent representation of the first layer).

The encoding instructions may be based on a viewing position and/or viewing orientation of a user.

The encoding instructions may be based on a user-induced zoom-in or zoom-out.

Transmitting the encoding instructions may be triggered by one or more of: a change in viewing position, a change in viewing orientation, a user-induced zoom-in and a user induced zoom-out.

The encoding instructions may comprise one or more of: structure information of the neural decoder and/or a neural encoder in the training loop, a metric for the training loop to optimize, encoding coefficients of the neural encoder, decoder coefficients of the neural decoder and tunable control parameters for a loss function in the training loop.

The invention also provides computer program carrier comprising computer program code which, when executed on a processing system, causes the processing system to perform all of the steps of any of the methods described herein.

The invention also provides processing system configured to read the computer program code in the computer program carrier and execute the computer program code.

Described herein is also a method for encoding a layered video signal with a first layer and a second layer, wherein second layer is dependent on the first layer, the method comprising:

encoding the first layer and the second layer, wherein:

at least one of the first layer and the second layer are encoded using neural coding, and
the first layer is encoded using a first loss function for optimizing a first metric and the second layer is encoded using a second, different, loss function for optimizing a second metric;

obtaining decoding parameters for decoding the first layer and the second layer; and
transmitting and/or storing the encoded base layer and encoded enhancement layer with the decoding parameters.

This enables the transmission (e.g., in a bitstream) or storage of a video which, at playback, is essentially optimized for two different metrics (by the two different loss functions). Thus, a user can decide how they would like to watch the video.

In a first example, the first layer is optimized for rate (i.e., bitrate) whilst the second layer is optimized for color accuracy. As such, the client can decide to stream the video at a low bitrate (e.g., by only decoding the first layer) or to stream a color accurate version of the video (likely at a higher bitrate).

In a second example, the first layer is optimized for low distortion at detected objects whilst the second layer is optimized for low distortion for the whole video. In this case, an object detection function may be used for the first layer, where the detected objects are optimized for distortion whilst the rest of the video could be optimized, for example, for realism (which typically requires lower bitrate). The object detection function, and a distortion function, would be part of a loss network for the first layer.

The first metric and the second metric may comprise one of a realism measure, a distortion measure, a color accuracy measure, a rate measure or an object detection accuracy measure.

In one example, only the second layer has the realism measure and the distortion measure as metrics to be optimized whilst the first layer has the distortion measure to be optimized, but not the realism measure. Thus, the first layer can be viewed to provide an acceptable image and, when required, the second layer can be added to provide more realistic image quality.

In another example, only the first layer has the realism measure and the distortion measure as metrics to be optimized whilst the second layer has the distortion measure to be optimized, but not the realism measure.

It will be appreciated that other metrics could be used (e.g., color accuracy, object detection or a low-complexity derivative thereof, a rate measure of one of the layers, a combined rate etc.). The particular metrics used for each layer will, of course, depend on the particular use-case and which optimized metrics are desired for each of the layers.

The color accuracy measure may be indicative of the color accuracy of the reconstruction relative to the original layer. The object detection accuracy measure may be indicative of the of an object identification algorithm identifying the same objects in the reconstruction relative to the original layer.

Encoding the second layer may be based on the decoding parameters of the first layer.

The decoding parameter may comprise decoding coefficients used by a decoder (e.g., a neural decoder) to decode the encoded first layer, encoding coefficients used by an encoder (e.g., a neural encoder) to encode the first layer, a reconstruction of the first layer and/or the encoded first layer (e.g., the latent representation of the first layer).

The at least one layer encoded using neural coding may be further encoded using a loss network for optimizing two or more metrics based on a tunable control parameter.

For example, the tunable control parameter may be used to implement a trade-off between the two or more metrics. In another example, the tunable control parameter may implement a limit for one or more of the metrics (e.g., a limit on the rate).

Both the first layer and the second may be encoded using neural coding.

Both the first and second layer may be further encoded using a first loss network and a second loss network respectively, wherein one of the first loss network or the second loss network is for optimizing a distortion measure and a realism measure and the other of the first loss network and second loss network is for optimizing a distortion measure but not a realism measure.

For the at least one layer encoded using neural coding, a neural encoder and/or a neural decoder used for the neural coding may be re-trained using the corresponding layer.

The method my further comprise receiving encoding instructions for the first layer and/or the second layer from a client and adapting the encoding of the first layer and/or the second layer according to the encoding instructions.

For example, the encoding instruction may comprise one or more of: loss parameters for adapting the first and/or second loss functions, network parameters for adapting a neural decoder of the neural coding and encoding parameters for adapting a neural encoder of the neural coding.

The encoding instructions may comprise one or more of: structure information of a neural decoder and/or a neural encoder of the neural coding, one or more metrics for one of the first loss function and/or the second loss function to optimize, encoding coefficients of the neural encoder, decoder coefficients of the neural decoder and tunable control parameters for the loss function.

Described herein is also a method for decoding an encoded layered video signal with an encoded first layer and an encoded second layer, wherein second layer is dependent on the first layer, the method comprising:

receiving decoding parameters for the first layer and the second layer

decoding the encoded first layer using a first decoder function with the decoding parameters for the first layer; and

decoding the encoded second layer using a second, different, decoder function with the decoding parameters for the second layer,

wherein one of the first decoder function or the second decoder function uses a neural decoder to decode the corresponding layer.

Decoding the encoded second layer using the second decoder function may be further based on the decoding parameters for the first layer.

In an example, when the second layer is of a different modality than the first layer (e.g., depth map, reflectance map etc. vs image), it may be advantageous to use the decoding coefficients of the first layer but not the encoded base layer, when decoding the second layer.

In one case, both the first and second decoder functions may be neural decoders and the decoding parameters may include decoding coefficients of the neural decoders. Thus, the decoding coefficients of the first neural decoder (for the first layer) may be used by the second neural decoder (for the second layer) to decode the second layer.

Alternatively, the first decoder function may be a conventional (non-neural) decoding process and the decoding parameters may include motion vectors, coding trees, predictors choices etc. of the first decoding process.

The decoding method may further comprise transmitting encoding instructions to an encoder and receiving the encoded first layer or the encoded second layer encoded according to the encoding instructions.

The method may further comprise determining a viewing characteristic (e.g. viewing position, viewing orientation, zoom etc.) of a user, determine a loss network (at which it is desired that the first or second layer is encoded) from the viewing characteristic and transmit the determined loss network to the encoder. This can be updated when the viewing characteristic changes.

The method may further comprise determining a viewing characteristic of the user and determining whether to decode the second layer based on the viewing characteristic.

The second layer may not be decoded and thus the first layer may be the only layer output for video playback.

Both the first decoder function and the second decoder function may use a neural decoder to decode the corresponding layer.

Described herein is also a computer program carrier comprising computer program code which, when executed on a processing system, causes the processing system to perform all of the steps of any of the methods mentioned herein.

Described herein is also a processing system configured to read the computer program code in the computer program carrier and execute the computer program code.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 shows an example of the functional composition of a neural network;
Fig. 2 shows the neural network of Fig. 1 split into two smaller networks;
Fig. 3 shows two abstracted layers of the neural network of Fig. 2;
Fig. 4 shows a neural network being optimized;
Fig. 5 shows an input being coded with a neural network;
Fig. 6 shows the use of a neural codec and a loss network, using rate-distortion optimization, to code an input;
Fig. 7 shows a loss network with rate control;
Fig. 8 shows an example of a neural post processor in video coding;
Fig. 9 illustrates a layered video in a prediction structure;
Fig. 10 shows a neural post-processor applied to layered video coding;
Fig. 11 shows a neural codec structure for layered video;
Fig. 12 shows a neural codec structure for encoding a reference frame and a dependent frame; and
Fig. 13 shows a frame being encoded according to encoding instructions.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for encoding a video signal. The method comprises receiving encoding instructions for encoding the video signal and encoding the video signal using a training loop for optimizing a metric of the encoded video signal, wherein the training loop comprises a loss function and one or more of a neural encoder and a neural decoder. The training loop is adapted based on the encoding instructions.

The invention makes use of neural networks in video coding. As such, the general concepts of neural networks and neural coding will be briefly explained below.

Neural networks

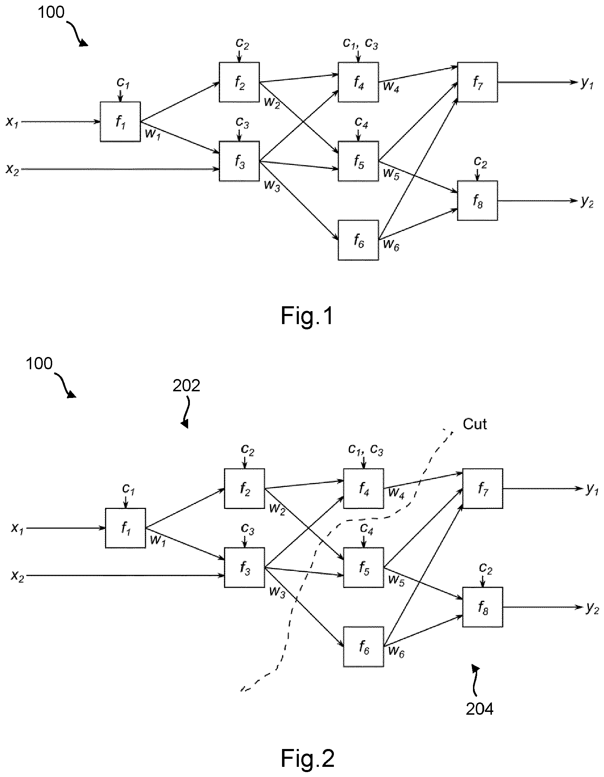

Fig. 1 shows an example of the functional composition of a neural network 100. A neural network is a composition of functions $[f_1, f_2 ... f_i]$ with known derivatives that are controlled by coefficients $[c_1, c_2 ... c_j]$, with inputs $[x_1, x_2 ... x_k]$, intermediate outputs $[w_1, w_2 ... w_l]$, and outputs $[y_1, y_2 ... y_m]$. In the example of Fig. 1, two inputs $[x_1, x_2]$ to the neural network 100, eight functions $[f_1, f_2 ... f_8]$ (with the corresponding coefficients and weights) and two outputs $[y_1, y_2]$ are shown.

In this functional model of a neural network, each function has at least one input (the inputs to the neural network 100 or the intermediate outputs from other functions), zero or more coefficients and one output. All variables are numbers or compositions of numbers. By applying composition rules, including the chain rule, the entire neural network 100 is automatically differentiable. A function is often called a node or neuron. A coefficient is often called a weight.

The differentiable nature of the neural network 100 is used to optimize the coefficients. Optimizing the coefficients is often called training or learning. Typical variable types for inputs, outputs and coefficients are scalars, tuples, vectors, matrices, n-dimensional matrices (called tensors) or any composition of the beforementioned data types.

Weight sharing is when two functions share a coefficient. For instance, in Fig. 1, both $f_2$ and $f_8$ use coefficient $c_2$. Some functions have no coefficients. For instance, in Fig. 1, if $w_1$ is a pair of values, then $f_6$ may be a "first" function that selects the first value and ignores the second one: $f_6(a,b) \rightarrow a$.

Fig. 2 shows the neural network 100 of Fig. 1 split into two smaller networks. A neural network 100 can be split into smaller networks by taking a full cut. In Fig. 2, the neural network 100 is split into two layers 202 (left) and 204 (right).

Typically, a neural network is abstracted to be a differentiable function F with coefficient c, input x, intermediate output w and output y. The lack of coefficients or intermediate outputs is equivalent to having an empty tuple as data type, and having multiple is equivalent to having a composite data type.

The concept of abstracting a neural network can be extended to the split network shown in Fig. 2.

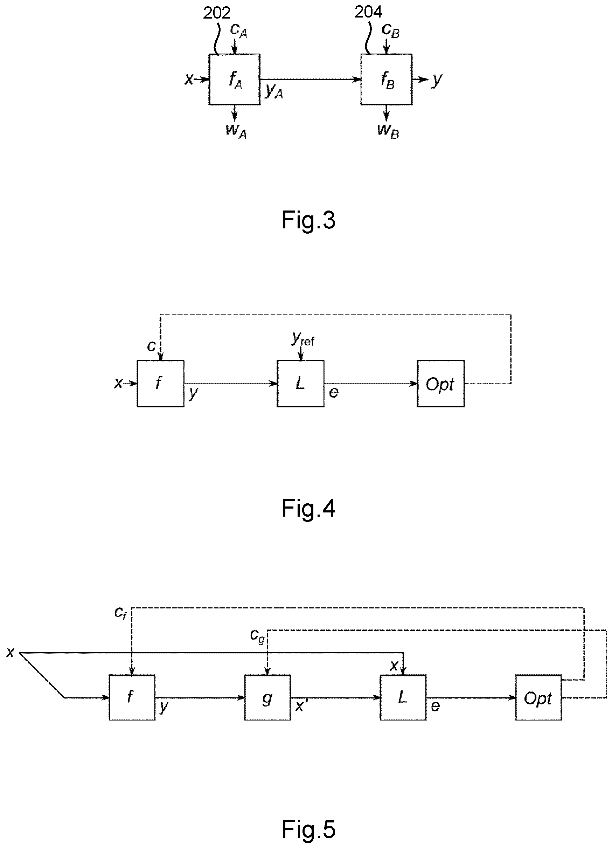

Fig. 3 shows two abstracted layers of the neural network 100 of Fig. 2. In other words, Fig. 3 shows the two neural network layers 202 and 204 of Fig. 2 such that the neural network $F = f_A \circ f_B$. Most of the variables previously discussed are now tuples:

$$c_A = (c_1, c_2, c_3)$$

$$c_B = (c_2, c_4)$$

$$w_A = w_1$$

$$w_B = (w_2, w_3, w_4)$$

$$y_A = (w_2, w_3, w_4)$$

Note here how the output $y_A$ of the first layer 302 contains the subset of the intermediate outputs ($w_2$, $w_3$, $w_4$) of the neural network as a whole.

Often, neural networks have millions of nodes based on a relatively small dictionary of functions. For a neural network to exhibit any meaningful behavior, there often needs to be a way to fold multiple inputs into one output which can be as simple as a linear combination with bias. For example:

$$f: (\boldsymbol{w}, \boldsymbol{c}) \to c_0 + \sum_{i=1} c_i w_i$$

Where:

$$df(\boldsymbol{w}, \boldsymbol{c}) = \sum_{i=1} w_i dc_i$$

Additionally, there often needs to be one or more non-linear function. The non-linear functions can be as simple as a rectified linear unit (RLU):

$$\mathrm{RLU}: x \to \max(0, x)$$

Where:

$$\mathrm{dRLU}(x) = \begin{cases} 0 & x \le 0 \\ dx & 0 < x \end{cases}$$

Note how all described functions above are differentiable.

A commonly used structure is the convolution neural network (CNN) which, in its simplest form, has three types of layers: a convolutional layer, a non-linear layer and, optionally, a pooling layer. The convolution layer is a generalization of a convolutional image filter (FIR). The inputs and outputs of such a layer are tensors and the domain of the functions is local (e.g., $5 \times 5$ samples), and weights are often shared. A non-linear layer could be an elementwise application of the RLU operation. A pooling layer folds or subsamples the intermediate outputs to bring down dimensionality.

Fig. 4 shows a neural network f being optimized. In order to optimize the neural network *f*, it is brought into a loop with a loss function *L* and an optimizer *Opt*. The loss function compares the outputy of the neural network, with a reference $y_{ref}$. Often, the reference refers to the expected or desired outcome of the neural network. The loss function has a scalar output e (for error, loss or cost) and the task of the optimizer is to approximate an optimal set of coefficients $c_{opt}$. For example, this can be achieved by:

$$c_{\mathrm{opt}} = \underset{c}{\arg\min}\, L\big(f_c(x), y_{ref}\big)$$

This is commonly achieved through gradient descent, based on the derivatives $\partial y_i / \partial c_j$ for all values of i and j. A well-known optimization method is stochastic gradient descent that uses pseudo-random subsets of the dataset in each training iteration (epoch).

Neural coding

Coding of neural networks involves the training and encoding of a neural network, the transmission over a channel, and the decoding of the neural network. After that, the decoder (or related module) can apply the neural network to new data.

The transmission typically uses a protocol that specifies what is transmitted and how, but also what information is pre-shared between the encoder and decoder.

Consider a function in the neural network $f(x) \to x^a$. If the decoder has knowledge of the value of *a* prior to decoding the bitstream, then *a* is referred to as a constant. Otherwise, the value needs to be transmitted. In the case where *a* needs to be transmitted, it is referred to as a coefficient.

It may be that the encoder starts from a preexisting network and only optimizes (trains) a relatively small number of the coefficients, and that the decoder will receive an occasional refresh (e.g., at random-access points) with values for all coefficients. Alternatively, there may be a side-channel to transmit the initial network, such as a uniform resource locator (URL) from which the network can be downloaded.

Often, coefficients are floating-point numbers (real numbers up to machine precision). However, coefficients may also be 8- or 16-bit integers. If coefficients are floating-point numbers, they can be quantized for coding purposes. Well-known coding techniques, such as context adaptive binary arithmetic coding (CABAC), are suitable for coding coefficients.

The structure information of the neural network is also relevant. Consider a function in the neural network that, depending on a value $s \in \{0,1\}$ selects a function j or *k*:

$$\text{either:} (x, s) \rightarrow \begin{cases} j(x) & s = 0 \\ k(x) & s = 1 \end{cases}$$

The function *either* is differentiable to *x* but not to s. Thus, s is not a coefficient. Instead, the value s represents a choice between two possible neural network configurations. In other words, s provides structural information of the neural network. The value of s can be transmitted to share, with the decoder, what network is selected.

In general, there is $s \in S$, where S is the set of allowed neural network configurations. Because there is a discrete set of possibilities, s can be encoded using a bit pattern, for instance also using CABAC.

If structure information is transmitted, then the neural network can be referred to as having a parametric structure. For instance, it may be that the size of some layers of the neural network can be adjusted depending on image resolution, or to allow for different bitrates.

Knowing how to transmit a neural network, it becomes possible (in principle) to code a video frame (or image) using a neural network.

Fig. 5 shows an input *x* being coded with a neural network. The first step is to define a neural network that reconstructs the input (i.e., a reconstruction network). In other words, the input to the neural network is *x* and the output of the neural network is *x'*, where the aim is that *x'* is as close as possible to x. The neural network can then be split into a neural encoder f and a neural decoder g.

The neural encoder *f* transforms the input *x* into a latent representation y, which is input into the neural decoder g, after which the neural decoder g outputs the reconstructed signal *x'*. The loss function *L* compares the original input *x* with the reconstruction *x'*. The error e output by the loss function could be as simple as the root-mean-square error (RMSE) of *x* and *x'*. The idea here would be that the decoder would have access to the decoder network g.

A problem with this is that the only way to constrain the bitrate would be by reducing the dimensionality of *y* relative to the input x. Often, this may be a suboptimal solution. Note that reference to the dimensionality here refers to the number of values (e.g., the number of scalar values in a vector/matrix/tensor). For instance, a matrix of N × M values has dimensionality NM.

Hence, a second step could be to add a loss function that is based on a rate-distortion optimization.

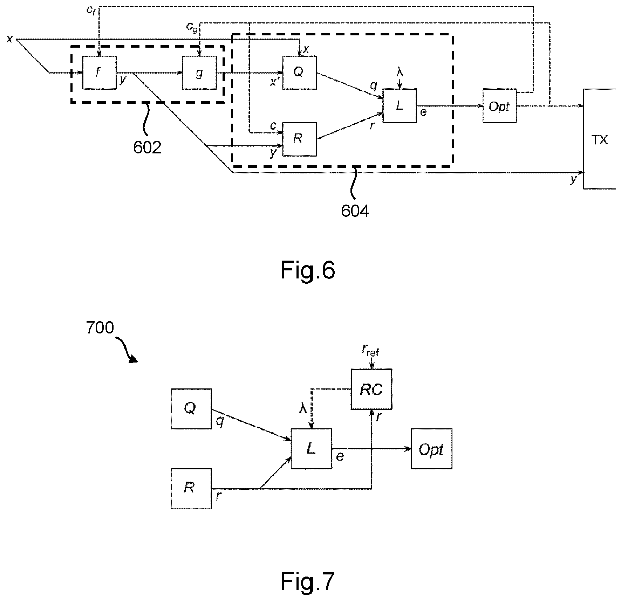

Fig. 6 shows the use of a neural codec 602 and a loss network 604, using rate-distortion optimization, to code an input x. Here, the function Q in the loss network 604 determines a distortion measure q, and the function R determines a rate measure r (estimated entropy) of the latent representation y. Additionally, a tunable parameter $\lambda$ implements the trade-off between the rate measure r and the distortion measure q at the loss function L. For instance:

$$L: (q, r) \rightarrow q + \lambda r$$

It is noted that, for the purpose of conciseness, a loss network 604 is defined (herein) to be the composition of functions that are sandwiched between the neural codec 602 (including the neural encoder f and the neural decoder g) and the optimizer *Opt.* For example, in Fig. 6, the loss network 604 would be comprised of the functions Q, R and L.

Similarly, tunable control parameters are defined to be the parameters that go into the functions of the loss network 604, such as $\lambda$. The tunable control parameters themselves are not optimized in the training loop.

Fig. 7 shows a loss network 700 with rate control. In practice, there may be a target rate $r_{ref}$ that should not be exceeded. In that case, this could be incorporated in the loss network 700, where the value of $\lambda$ may start low and gradually increase each epoch:

$$L: (q, r) \rightarrow q + \lambda \max(0, r - r_{ref})$$

If the target rate must not be exceeded, then a rate control function RC can be added to the loss network 700 to automatically find a value for $\lambda$ that keeps the rate *r* below the target rate $r_{ref}$. In this case, $r_{ref}$ replaces $\lambda$ as a tunable control parameter.

It has been realized that there are various options for training the neural codec. A first option involves training the neural codec on a large collection of image data, where the information about image *x* is encoded in the latent space y. This concept matches best with a non-neural video codec.

A second option involves pre-training the neural codec on a large collection of image data and further training the neural codec on the video that is being encoded. The video is encoded in the latent space *y* and the decoder coefficients $c_g$.

A third option involves encoding all the information in the decoder coefficients $c_g$ and the neural encoder f is replaced by a constant or random function. This matches best with an autoregressive signal model. In essence, the video would be entirely encoded in the decoder network and input signals would add image noise (e.g., for realism).

Neural post-processor

Current 2D video codecs are the result of decades of work and dedicated hardware is ubiquitous. It may take a while before neural video codecs are able to compete in terms of rate and distortion (i.e., the difference between an original input video and the reconstruction) when also considering power consumption.

In the meantime, there are already practical neural implementations for frame interpolation (e.g., temporal up-sampling), super-resolution (e.g., resolution up-sampling) and denoising. Based on this, it is expected that the afore-mentioned concept of a neural codec could be implemented as a neural post processor in the near-term.

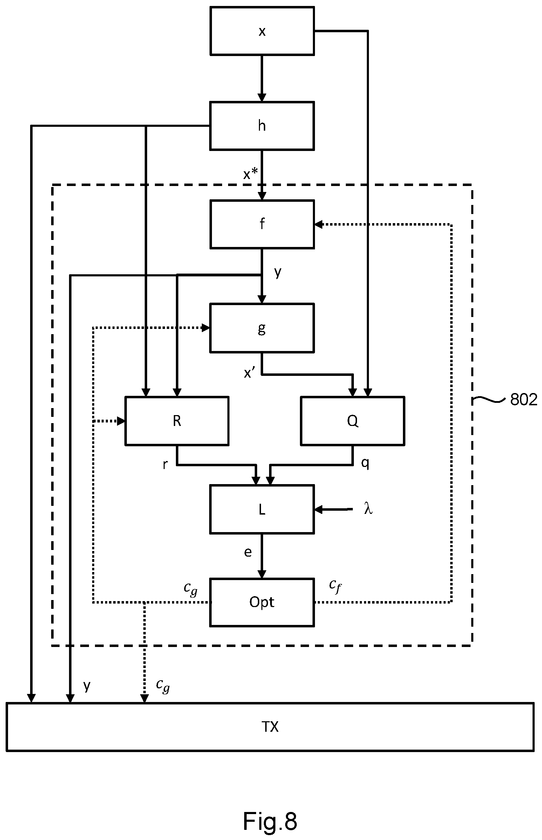

Fig. 8 shows an example of a neural post processor 802 in video coding. In this approach, there is a non-differentiable video encoder h that encodes the input x outputs a bitstream b and a reconstruction x*. Note here that the reconstruction x* is a decoded version of the bitstream b.

The neural post processor 802 here refers to the functions (f, g, R, Q, L and Opt) used after the video encoder h. The neural post processor 802 filters the reconstruction x*, resulting in a reconstruction x' using the neural encoder f and the neural decoder g. The distortion measure function Q compares the neural reconstruction x' with the input x to determine the distortion measure q. This scheme works because everything after the video encoder h is differentiable. This property is what makes it a post processor. In this case, the function R determines the combined rate r of the bitstream b and the latent representation y. As before, the loss function L uses a tunable control parameter λ to determine a trade-off between r and q to determine an error e. The error e is input into the optimizer Opt. The loss function L, together with the optimizer Opt, attempt to optimize the metrics q and r by adapting the coefficients $c_f$ for the neural encoder and the coefficients for the nerual decoder $c_g$.

The decoder consists of the decoder part of h (not drawn), and neural decoder g together with a receiver. There is a choice if a frame is encoded in y, $c_g$ or both, as previously discussed. The information in y is enhancement information (features) for x* and $c_g$ represents the coefficients of the decoder function g tuned for x*.

Note that ify is not transmitted, then the coefficients $c_f$ (used by the neural encoder f) also needs to be transmitted (unless empty). This is because x* can be obtained by the decoder by decoding b (as it would do anyway) and the decoder could then apply the encoder function f, with coefficients $c_f$, to obtain y.

Generative adversarial networks (GAN)

Recently, the developments in neural networks have led to the use of generative adversarial network (GAN) loss functions for video encoding. The general idea is that an image patch no longer needs to resemble the real image patch locally but that, for example, the genre of the video is maintained. For instance, a picture with an ocean with waves in the background is reconstructed where the water is still present, but the exact position of the waves is no longer the same as in the source video.

With an increased use of GAN losses for video encoding, the decoded video will lose functionality in some applications. For instance, in forensics imaging or medical imaging applications, the spatially correct pixel data are essential for the analyst or an algorithm that analyses the data. At the same time, a quick overview of the type of data can be useful.

A GAN consists of a generative network that "hallucinates" an output, and a discriminative network that evaluates the output. The discriminative network is trained to discriminate between generated outputs (e.g., a synthesized image of a face) and known real values (e.g., a photo of a face).

In a loss network as described herein, the discriminative network would be part of the loss network.

The surprising strength of the GAN approach is in that the two networks are placed in a lockstep battle, pushing each other towards higher performance. Naturally, as always with machine learning, if there is not enough diversity in the inputs or if the training is not carried on for enough epochs, the outputs from the GAN may not be appropriate.

The scalar output of the discriminative network is called a realism measure. This is quite different from a distortion measure because the fact that an image looks good (or realistic) does not mean it the same as the encoder input. Humans are willing to tolerate some coding artifacts (blur, blocks, fringes). However, a neural network that hallucinates new objects that are not in the original scene may not be acceptable for an observer.

For instance, a paper by F Mentzer et. al. "Neural Video Compression using GANs for Detail Synthesis and Propagation" (arXiv:2107.12038. 23 November 2021) presents the first neural video compression method based on GANs. This paper shows that the introduction of a GAN loss function significantly increases compression performance when compared to the more traditional metrics such as peak signal-to-noise ratio (PSNR), multi-scale structural similarity index metric (MS-SSIM) and video multimethod assessment fusion (VMAF).

Layered video codecs

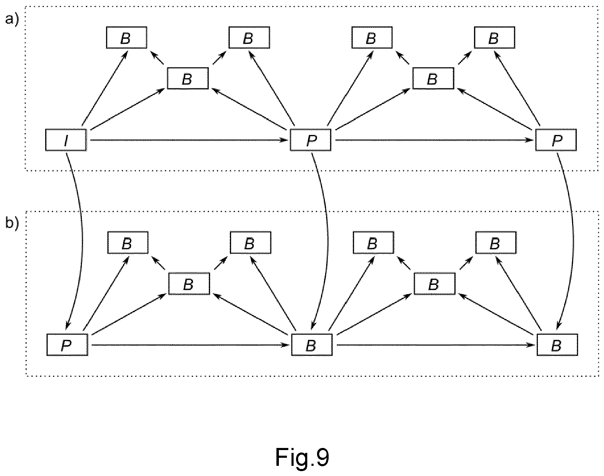

Fig. 9 illustrates a layered video in a prediction structure. Prediction structures are used in video coding whereby a frame is decoded using multiple (zero-or-more) reference frames. When a frame has no reference frames then it is called an intra-frame or I-frame. When there is one reference frame, then it is called a predicted frame, or P-frame. When there are two reference frames (forward and back in presentation order) then it is called a bidirectional frame, or B-frame. The horizontal direction of Fig. 9 (left to right) illustrates the presentation order of the frames. Of course, it will be appreciated that B-frames can only be presented after the frames on which they are dependent are decoded. Thus, the decode order may not be the same as the presentation order.

When the prediction structure repeats every so many frames, this is called a group-of-pictures (GOP). In the example of Fig. 9, the GOP length is eight. Alternatively, the prediction structure may depend on the content, and it does not have to be fixed. For instance, an I-frame may be inserted (only) at shot cuts (e.g., at changes in the scene).

There are many possible prediction structures, and one useful example to add is that of a layered video codec in which the bitstream has multiple layers, where base layers are independently decodable while dependent layers are only decodable after the reference frames in the base layers have been decoded. This is illustrated in Fig. 9 as base layer a) and dependent layer b). Classes of layered codecs include Scalable video codecs, enhancement video codecs, multiview video codecs and multiview+depth video codecs.

The main difference between a scalable video codec and an enhancement video codec is that the enhancement layer may have another representation, while all layers in a scalable video codec share the same video format.

A multiview video codec has a different viewpoint in each layer and, when these viewpoints are close enough, it is possible to reduce redundancy by predicting one view from another. It may, for instance, be that the central view is in the base layer, and all other views are in a dependent layer.

A multiview+depth video codec encodes both color and depth. Prediction from a reference frame may include a view synthesis step.

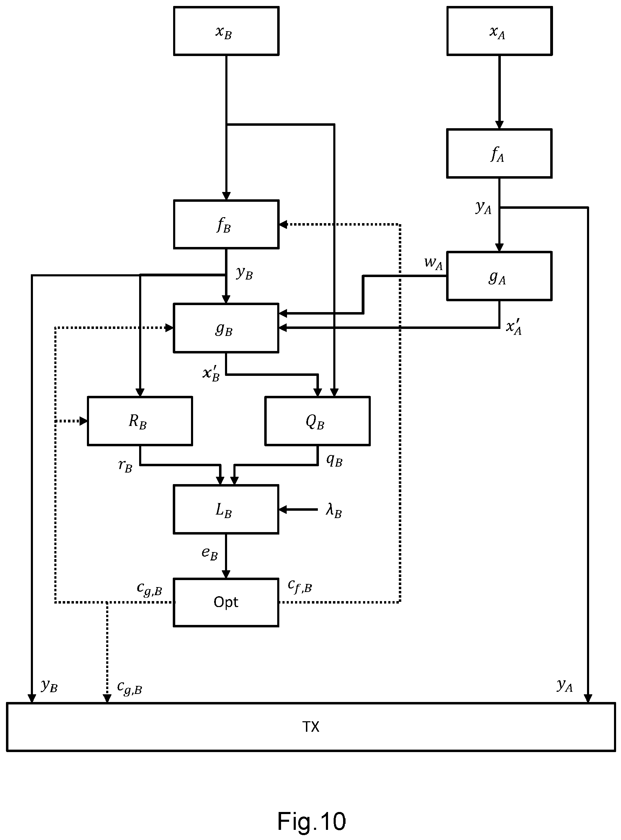

As such, the afore-mentioned neural post-processor concept can be applied to layered video coding. Fig. 10 shows a neural post-processor applied to layered video coding. In this case, the base layer $x_A$ is independently decodable and provides a low-fidelity video stream. The enhancement layer $x_B$ is coded dependent on the base layer and can be used to increase the fidelity of a frame. Here, fidelity may relate to having a higher spatial resolution, higher temporal resolution, higher bit depth, deeper color, larger dynamic range, less noise, etc.

It is noted that there is often a subtle difference between neural post-processors and neural codecs. The difference is usually based on how the resulting bitstream is structured. A neural post-processor in general may not need bitstream elements, or there may be information in the bitstream but not in the form of a layer. A video layer is a specific concept that relates to network abstraction layer (NAL) units. A bitstream typically consists of a sequence of NAL units and a NAL unit has a short header that can be used to partition a bitstream into layers. It is thus possible to split a bitstream into layers without parsing much of the bitstream. A neural post-processor may function based on coefficients that are transmitted as an enhancement layer.

Here, the neural encoder $f_A$ encodes the base layer and outputs an encoded base layer $y_A$. The neural decoder $g_A$ decodes the encoded base layer and outputs a reconstructed base layer $x'_A$. The reconstructed base layer and/or the intermediate outputs $w_A$ of the neural decoder $g_A$ can be used by the neural post processor for the enhancement layer $x_B$.

Of course, it will be appreciated that conventional encoders and decoders could be used for the base layer, where the reconstruction $x'_A$ of the base layer (by a conventional decoder) is used by the neural post-processor.

The enhancement layer $x_B$ is encoded by the neural encoder $f_B$ which outputs $y_B$ using the coefficients $c_{f,B}$. The neural decoder $g_B$ then receives $y_B$ as an input and, optionally, intermediate outputs $w_A$ and/or $x'_A$ as further inputs using the coefficients $c_{g,B}$. The neural decoder $g_B$ outputs a reconstruction $x'_B$ of the enhancement layer. The reconstruction $x'_B$ is input into the function Q, where it is compared with the enhancement layer $x_B$ and a distortion measure $q_B$ is determined. Additionally, the encoded enhancement layer $y_B$ is input into function R where the rate measure $r_B$ is determined. The rate measure $r_B$ and the distortion measure $q_B$ are thus input into loss function $L_B$ which, using the parameter $\lambda_B$ as previously discussed, determines an error $e_B$. The error is input into an optimizer which adapts the coefficients $c_{g,B}$ and/or $c_{f,B}$ and the loop is continued. Once the neural post processor is sufficiently optimized, the encoded enhancement layer $y_B$ and the optimized coefficients $c_{g,B}$ are transmitted together with the encoded base layer $y_A$.

Note that the encoded enhancement layer and the encoded base layer essentially refer to the latent representations of the neural network comprised of the neural encoder and neural decoder for each video layer.

Thus, it is proposed to encode a video by optimizing multiple metrics simultaneously via layered coding such that, depending on the use-case, the video can be downloaded using the metric itself as differentiating factor.

This is based on the fact that, if a neural network is transmitted, only the part that is not known to the decoder has to be transmitted. This could be anything from nothing, a single value for a coefficient, the structure of the layers or the whole neural network. As such, the more data (of the neural network) that is transmitted, the more personalized the neural network (at the decoder side) can be. This is particularly important in video decoding when trying to balance the size of the bitstream and the quality of the decoded video.

Thus, it proposed to build an encoder for a layered video sequence with at least a first layer and a second layer, whereby the second layer depends on the first layer, and whereby the first and second layers have a different loss network for optimizing different metrics each.

In one example, the encoder may encode at least two layers, where each layer is encoded using different loss functions/networks, and transmit the at least two layers. As such, a client can decide to decode the only the layers encoded according to a loss function/network of interest. This results in a large computational benefit for the client as only the layers of interest (based on the loss function/network of interest) are downloaded/decoded etc.

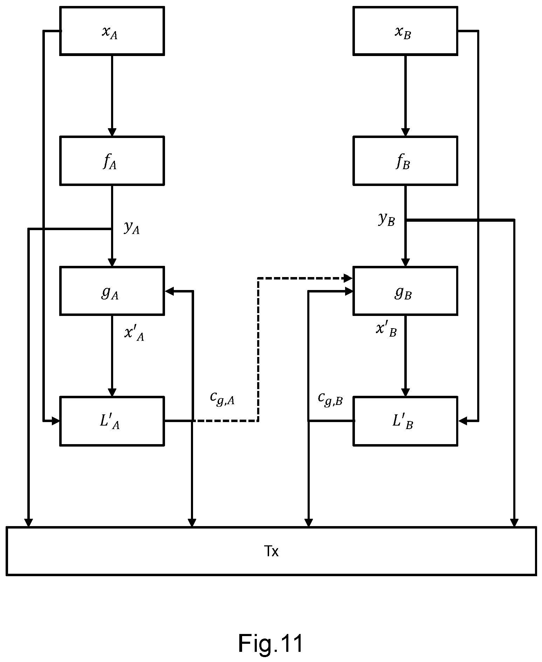

Fig. 11 shows a neural codec structure for layered video. A base layer $x_A$ is encoded with a neural encoder $f_A$ and subsequently decoded with a neural decoder $g_A$ to output a reconstruction $x'_A$ of the base layer. In this example the loss network $L'_A$ is used to train the decoder function by attempting to optimize the coefficients $c_{g,A}$ by, for example, comparing the reconstruction $x'_A$ to the base layer $x_A$ thereby attempting optimize a first metric (e.g., realism).

Assuming a client has access to the structure of the neural decoder $g_A$, the latent representation $y_A$ (i.e., the encoded base layer) can be transmitted with the coefficients $c_{g,A}$ such that the client can obtain the reconstruction $x'_A$. The client could obtain access to the structure of the neural decoder $g_A$, for example, by receiving the structure at the start of the video. Alternatively, the structure (or part thereof) could be updated and transmitted as required (e.g., when the scene changes in the video).

The enhancement layer $x_B$ is processed in a similar manner, using a neural encoder $f_B$, a neural decoder $g_B$ and a loss network $L'_B$ to optimize a second, different, metric (e.g., distortion). However, the coefficients $c_{g,A}$ may be used by the neural decoder $g_B$ when reconstructing the enhancement layer to reconstruction $x'_B$. As with the base layer, the latent representation $y_B$ can be transmitted together with the coefficients $c_{g,B}$.

Here, the loss network $L'_A$ could be used to attempt to optimize, for example, a realism measure. As such, the reconstructed base layer $x'_A$ at the client would provide a scene which looks good, even if it's not fully accurate to the base layer (e.g., the shape/position of waves in the sea may not be accurate).

Further, the loss network $L'_B$ could be used to attempt to optimize, for example, a distortion measure. As such, the reconstructed enhancement layer $x'_B$ at the client could provide an enhancement to the scene of the reconstructed base layer $x'_A$ to make it look more accurate compared to the base layer.

Thus, if a user only wishes to see a general view of the scene, the reconstructed base layer $x'_A$ may be sufficient. In this case, the client does not need to decode the enhancement layer. However, if the user wishes to see an accurate representation of the scene (e.g., for forensic reasons), the reconstructed enhancement layer $x'_B$ may provide a more accurate version of the scene.

As such, it is also proposed to build a receiver with a decoder for a layered video sequence with at least a first layer and a second layer, whereby the second layer depends on the first layer, and whereby the first and second layer have a different decoder function. Decoder coefficients are also received, with the first and second layers, which are used by at least one of the decoder functions to decode the first and second layer.

In another example, the base layer may be encoded with a conventional (non-differentiable) encoder and decoded by the client with a conventional (non-differentiable) decoder, whilst the enhancement layer is encoded and decoded using the neural encoder and decoder as described above. Of course, it may also be possible for the base layer to be encoded/decoded with the neural encoder/decoder whilst the enhancement layer is encoded/decoded with a conventional (non-differentiable) encoder/decoder. This may depend on the particular use-case.

In general, the bitstream from the encoder should include every input into the neural decoder $g_A$ that is not already pre-shared, can be obtained from the other inputs or is known from decoding the base layer. Additionally, the bitstream should include every input into the neural decoder $g_B$ that is not already pre-shared, can be obtained from the other inputs or is known from decoding the base layer.

The examples herein are shown with a single base layer and a single enhancement layer. However, it will be appreciated that any number of base layers and any number of enhancement layers may be used in practice. The bitstream may be organized such that any of the dependent layers can be filtered out, while preserving other layers.

A motivation of having different loss networks for the enhancement layer and the base layer is that, having a single bitstream to compromise multiple uses is unsatisfactory because, generally, it is not possible to have one bitstream that has all metrics of interest optimized (e.g., low bitrate, low distortion, high realism, etc.). Additionally, having a separate video bitstream for each use is expensive in terms of required encoder hardware, power consumption, and bitrate. Thus, the different loss network allows for multiple uses.

As previously discussed, one (or both) of the loss networks may include a realism measure.

The term realism measure is a generalization of GAN loss. The expectation in the industry is that neural video codecs that use a GAN loss are able to produce videos that look good at a low bitrate. When zooming in, things may look weird. However, in this case, the other layer can have a different loss network that is more suitable for zooming in.

For example, one of the loss networks may include a distortion measure and a realism measure, and whereby the other layer has a loss network that includes a distortion measure but not a realism measure.

The metrics/loss information (e.g., realism measure, distortion measure, rate measure, tuned rate control settings etc.) used in a first loss network (e.g., for the base layer) could also be input into the encoding process of the other layer (e.g., the enhancement layer).

While providing benefits to a client, encoding multiple layers requires more resources (hardware or paper) than a single layer and, in a 1:N transmission scheme with low N, this may be a problem. Because the input signals to the multiple layers are identical, or at least related (e.g., nearby viewpoints or different modalities of the same pixels), and, by extent, the output signals are also related, it is possible that control information from the training loop of the base layer is useful to speed-up the parameter tuning of the dependent layer.

This can reduce the number of epochs that are needed to train the neural network for a dependent layer. A concrete example is a first estimate of the lambda that is needed to hit a rate. Even when these values are not the same, when the tunable parameter $\lambda$ of the first network changes over time due to variations in the content, then these are good predictors for how the parameters/coefficients of the second network need to change to compensate in a similar way. Knowing these changes in advance may result in a "direct" gradient descent towards the optimum, thus saving on the number of epochs, and thereby power consumption. Due to hardware constraints, there is usually a fixed number of epochs, thus the network would be more optimal when starting with better control parameters.

For example, one of the loss networks (for a first or second layer) may be based on the realism measure and/or distortion measure of the first layer, the realism measure and/or distortion measure of the second layer, and the combined bit rate.

Often it is possible to transmit a full bitstream to an edge server (i.e., a server that is at the last hop to the client) to transmit only a video track with the relevant layers to the client. In this case, only the bitrate of the video track is relevant (assuming that the connection to the client is the bottleneck). However, in more simple transmission schemes, or when a client needs to receive multiple alternative layers/tracks, then it is advantageous to perform a joint rate optimization of multiple layers. This balances the total bitrate with the quality of each individual layer. Care may need to be taken to ensure that the quality of one layer is comparable to the quality of another layer. By scaling the quality of one layer vs. the other, one layer can be made more important than the other. More bits could be allocated to the layer of which the importance of quality is scaled up.

The encoder may run at least one training epoch on a video frame with the purpose to overfit the loss network on this frame and transmits an update of the decoder network coefficients within, for example, the access unit of the frame.

In one example, network information (e.g., the network coefficients) are only transmitted at random-access points (full refresh), after which only the output of the encoder network (e.g., a feature map) is sent. It is advantageous to allow the encoder to tune the coefficients of the encoder network and/or the decoder network to better represent a frame. While transmitting the updated coefficients requires bits, this can be offset by having a more compact output.

This works with any prediction scheme including hierarchical GOP structures and inter-layer prediction.

As will be appreciated, the concepts discussed herein can be applied to both neural codecs (i.e., coding using a split neural network) and neural post-processors (i.e., processing of encoded data using a neural network).

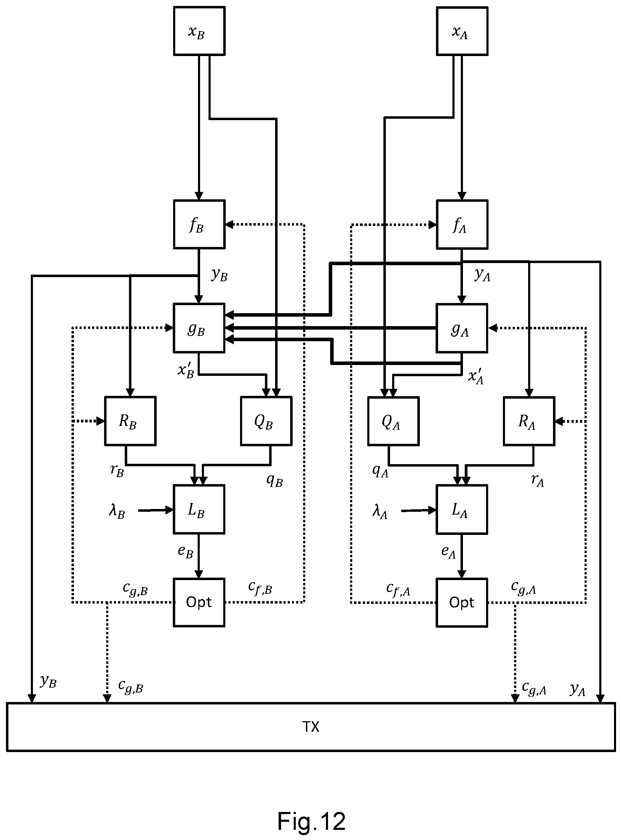

Fig. 12 shows a neural codec structure for encoding a reference frame $x_A$ and a dependent frame $x_B$. As previously discussed, encoder networks $f_A$ and $f_B$ are used to encode the frames to latent representation $y_A$ and $y_B$. Neural decoders $g_A$ and $g_B$ are used to decode the latent representations into reconstructions $x'_A$ and $x'_B$. In this case, the loss networks comprise a rate function $[R_A, R_B]$, a distortion function $[Q, Q_B]$ and a loss function $[L_A, L_B]$. The loss functions use the inputs from the rate functions and the distortion functions, as well as a tunable parameter $[\lambda_A, \lambda_B]$ to determine an error $[e_A, e_B]$. The errors are optimized by adapting the decoding coefficients $[c_{g,A}, c_{g,B}]$ as well as, in this case, the encoding parameters $[c_{f,A}, c_{f,B}]$ in an encoder loop.

Further, in this case, one or more of the latent representation $y_A$ of the reference layer, the decoding coefficients $c_{g,A}$ and the reconstruction $x'_A$ are used as inputs to the decoder function $g_B$ of the dependent layer. Of course, as previously discussed, the distortion measure $q_A$ of the reference layer and/or the rate measure $r_A$ of the reference layer may also be used by the loss network $L_B$ of the dependent layer.

The structure would look the same for temporal prediction (GOP structure) or inter-layer prediction (such as inter-view prediction or scalable coding).

Complementary to the encoder, a receiver is proposed (more generally referred to as a client) with a decoder for a layered video sequence with at least a first layer and a second layer, whereby the second layer depends on the first layer, and whereby the first and second layer have a different decoder function, where at least one of the decoder functions is a neural decoder as previously described. The client receives, for example, decoder coefficients for the neural decoder.

Allowing multiple layers with different decoder functions contributes to solving the problem of having multiple bit-streams. Because the layers depend on each other, the additional bitrate that is needed to offer the extra representation of the video is a fraction of what would be needed for independent streams. Because the layers have different decoder functions, the decoder is suitable for decoding layers that have a different use.

Note that the decoder function may not be directly present in the bitstream, thereby reducing the total amount of data. Of course, this means that some information of the decoder network will be needed at the client side. As previously discussed, these can be transmitted periodically (or when needed). For example, the general structure could be transmitted at the start of the video and then further updated as and when required.

The client with the receiver may be able to select which layer is output by the decoder (e.g., for playback). When client switches task (e.g., observing to analyzing), they would thus be able to almost instantaneously switch the layer(s) used for playback as all layers have already been received. For example, the first layer may be useful for observing the scene whilst the first layer, enhanced by the second layer, may be useful for analyzing the scene.

The latest frames (or part thereof) of the first layer and the second layer may be stored in a (rotating) buffer, whereby the second layer of the video is decoded with a time delay at the request of the client (e.g., depending on the application).

For example, a user induced zoom-in may trigger a request for switching from a layer encoded using GAN loss to a layer encoded using PSNR loss (i.e., a more accurate encoding scheme). Similarly, a user induced zoom-out may trigger a request for switching from a layer encoded using PSNR loss to a layer encoded using GAN loss.

Interactive streaming scenarios can also take into account the relation between zoom factor and loss function. In a forensics application, zoom-in could mean a switch from a GAN loss to a per pixel loss (e.g., PSNR). If the PSNR loss is represented as the second layer, this layer can be encoded as tiles such that when zooming in only a few tiles are retrieved.

Using tiles or blocks of image data, a base or enhancement layer representing a given loss function can be sparsely available. For instance, with a GAN base layer and a PSNR enhancement layer, a blue sky with clouds could only represent the GAN base layer and not have a PSNR enhancement layer at all. It may be useful to (visually) indicate per region (e.g., using a grid overlay and text) which loss function was used for a specific spatial region. This could be relevant for forensics applications.

Loss functions are typically designed with a certain requirement. For example, a MSE loss function has the intention to avoid large, per pixel, errors whilst a GAN loss's purpose is to avoid images starting to look un-natural.

There may be loss functions that are designed to keep images of a given object class as accurate as possible while tolerating errors on images of other object classes visible in the same image. Such a category specific loss could be implemented as one or more independent enhancement layers. A client device could then ask for a video stream that has images of cars always coded at a per pixel PSNR while other aspects of scene (e.g., background, streets, houses) are encoded using a GAN loss. Again, the spatial domain (not necessarily a rectangle) for which each loss function was used can be communicated to the client side. Another example is an enhancement layer that always keeps images of faces per pixel accurate using PSNR.

In use, the first layer may be the only layer output for playback (e.g., when there is no request of the client). This may occur when a user is simply watching the video without interacting (e.g., zooming in/out) with the video.

The first layer may be decodable by a non-differentiable (e.g., fixed-function, legacy) video decoding process and the second layer is decodable by a neural video decoding process (i.e., using neural coding. Thus, decoding the first layer can be achieved using conventional, legacy, video decoders whilst the second layer (e.g., containing enhancement information) can be decoded using the neural decoder.

In essence, this provides a decoding scheme for the neural post-processor previously referred to in Fig. 8, where the output of the (legacy) video encoder h corresponds to the first layer and the latent representation y corresponds to the second layer, which can be decoded with a neural decoder using the decoder coefficients $c_g$.

The benefit is that a large chunk of the decoding can be done using dedicated hardware support for legacy video codecs.

As discussed with the encoder, intermediate outputs (e.g., outputs $w_A$ as shown in Fig. 10) of the first layer can be used as inputs for the neural decoder of the second layer.

When the outputs of two video layers are substantially different, the output of the first layer is not that predictive for the second layer. However, some of the intermediate outputs will be predictive because there will be network layers of the neural network that relate to information in the content that is shared between the video layers. This is "free" information because the decoder can postpones deleting the received decoder coefficients of the first layer until after the second layer is decoded.

It will be appreciated that the (coded) frame of the first layer can also be used as an input to the second layer.

The "coded frame" is not yet decoded, hence all information that is transmitted for the first frame (e.g., a reference frame) is also used for the second frame (e.g., a dependent frame). Essentially, the second frame is decoded using a neural network that is placed after the neural network of the first frame(s).

Of course, it is not necessary for the reconstructed frame of the first layer to be used in the reconstruction of the second layer.

The first layer and the second layer may comprise frames of a different modality (e.g., depth map, multi-spectral, object map, reflectance, normal map, etc.). When the modality is different, it is useful to share intermediate outputs. However, it may not be as useful to share the reconstructions of the other frames.

For example, the first and second layers may be images of a scene at different viewpoints. As before, when the viewpoint is different, it is useful to share intermediate outputs, but it may not be as useful to share the outputs of the other frames.

When a conventional coding scheme is used for one of the layers, the intermediate outputs of the conventional decoding process, such as coding trees, motion vectors or predictor choices, may be input to the neural decoder for the other layer. In essence, this is the neural post-processor variant for the decoder. In this case, the "intermediate outputs" may include information such as motion vectors, coding trees, predictor choices, etc. Having this information can help to have a better output with a more compact decoder network for the dependent layer.

It is further proposed that the encoder receives encoding instructions (which may also be referred to as training instructions) from a client, configures a training loop according to the instructions, and encodes one of the layers using the training loop.

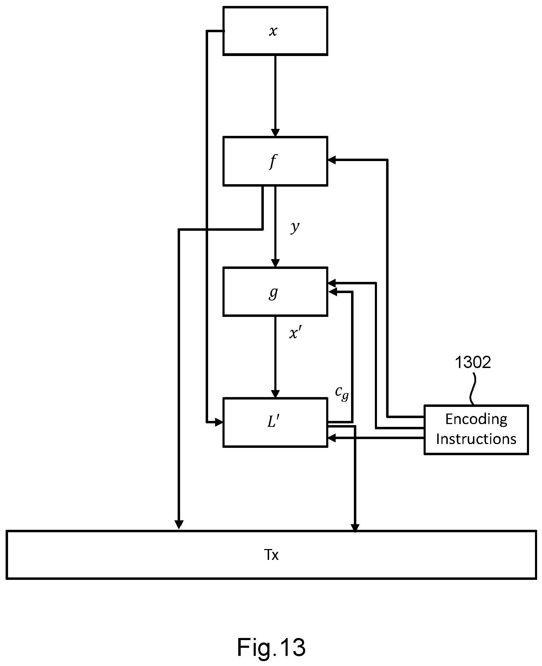

Fig. 13 shows a frame $x$ being encoded according to encoding instructions 1302. In this case, the frame is encoded by a neural encoder $f$ and a traning loop is initialized whereby a neural decoder $g$ decodes the latent representation $y$ ouput by the neural encoder into the reconstruction $x'$. In this case, the reconstruction $x'$ is compared to the original frame $x$ by the loss network $L'$, whereby the loss network adapts the decoding coefficients $c_g$ for the next traning loop.

The loss network and/or the nerual codec are adapted based on encoding instructions 1302 received from the client. One or more of the functions included in the loss network may be adapted based on the encoding instructions 1302. The structure of the neural encoder and/or the neural decoder may also be adapted.

For example, in a 1:1 streaming scenario, when video is streamed and the client wants to switch from one use to another (e.g., observation vs. detailed analysis), then it would be useful if the training loop at the encoder can be reconfigured for this use, while streaming.

The received encoding instructions may include part of a loss network and/or the neural codec, including a network structure, decoder coefficients and/or tunable control parameters.

To change the use of a video, the loss function may be changed, and this will cause the encoder to optimize the video in a different way. The encoder may retrain the neural codec each frame or less frequently, for instance, only when receiving new encoding instructions.

When the encoding instructions include a network structure, the training loop may change the type of network. For instance, there may be a list of options including GAN, PSNR or any other objective metrics (VMAF, SSIM).

When the encoding instructions include loop coefficients, the loop coefficients which are used may depend on the network structure. One specific coefficient that is useful to tune is the relative weight of the realism measure and distortion measure in the loss network, if both are present. The loop coefficients may also include decoding coefficients and/or encoding coefficients.

In terms of the tunable control parameters, two examples of these types of parameters include the parameter that controls quality vs. bit rate (i.e., $\lambda$ as shown in Fig. 8) and the mean/max bit rate for the entire video, or for each individual layer.

It is noted that the distortion is generally an inverse measure of quality - a lower distortion means a lower reconstruction error which, generally, also means a higher quality.

The encoding instructions may include part of an encoder network or decoder network, including a network structure, loop coefficients or tunable control parameters.

The encoding instruction may also comprise instructions to adapt the neural encoder and/or the neural decoder. In a first example, a smaller decoder network requires less resources for a client. In a second example, different encoder networks may create different types of videos, even with the same loss function.

When combining the concept of multiple loss functions (as discussed for Figs. 11 and 12) with the concept of receiving encoding instructions, the encoder can output a multi-layer video bitstream with the benefit that the client can choose later in time (when stored, years later) which layer is most suitable for playback, and in addition to that some or all of the layers can be adjusted to the preferences of the client.

Thus, a transceiver with a decoder for a video sequence with one or more layers can be built, whereby the transceiver transmits the encoding instructions (e.g., selects a loss function), and whereby the transceiver is capable of receiving a video sequence that is coded according to the loss function.

In this case, there exists a signal path in the opposite direction (i.e., towards the encoder) which provides instructions for the neural video codec training loop (e.g., the instructions include a portion of the training loop), such that the video that is transmitted and thus received is more suitable for the purposes of the client.

Each time the encoding instructions are transmitted (e.g., including any part of the loss network and/or any rate control functionality), the decoder is prepared to receive updates on changes to the decoder network, etc. with some delay after the request was transmitted. It may be that decoder only allows network updates on random access points (i.e., during I-frames). However, a a decoder could be flexible enough to receive updates for any frame of any video layer.

The client may transmit updated encoding instructions (e.g., an updated loss function) in response to the viewing position or orientation of the viewer.

In one example, the client may specify a loss function in the encoding instructions, send a request to a server and receive a compressed video encoded according to specified loss function.

In a second example, a user-induced zoom-in triggers a request for switching from, for example, a GAN loss to PSNR loss. Similarly, a user-induced zoom-out may trigger a request for switching from PSNR loss to GAN loss.

The encoding instructions may specify a gradual transition when changing part of the training loop (e.g., by gradually adding realism over time in many steps).

In a third example, the client may specify a switch from GAN loss to PSNR loss when the observer moves closer to an object in the scene.

The combination of the latent representation and coefficients may result in a lower bitrate because the frequent, or per-frame, optimization of the neural decoder network results in more compact inputs. This is a bitrate trade-off. However, it is possible to update only a small part of the decoder network (e.g., a few layers, part of/all the coefficients etc.), to have a large effect with only a small increase in bitrate due to transmission of the neural network. Generally, the early portion of the decoder network (known as the backbone) may remain fixed (both the structure and coefficients).

The coding of a layer may include a decoder structure of the neural decoder. Instead, or in addition to, retuning the neural network by updating coefficients, it is also possible to replace part of the functions in a network by other functions from a pre-determined dictionary of functions.

A concrete example is a decoder network of which the shape (width, depth) is parameterized, and the coefficients are shared between nodes in such a way that the shape change is independent of the coefficient updates.

Being able to update the structure like this helps to adapt to changes in the content, or changes in video coding requirements.

The encoding of a dependent layer may borrow/share coefficients from at least one of the reference layers. The benefit is to save bitrate by transmitting less coefficients.

The neural decoder network of the dependent layer may share some similarity with the neural decoder networks of the reference layer. For instance, some network layers of the decoder functions may be the same or there may be some function blocks with coefficients that are applied in multiple positions.

Coding of a dependent layer may borrow/share intermediate outputs (i.e., the latent representation) from at least one of the reference layers.

The encoder may transmit a supplemental enhancement information (SEI) message, with information on the loss function(s) used to the decoder.

The client could receive feedback on which loss-function is being used for the current data being viewed. For instance, in the corner of the screen overlay, text may show 'MSE mode' or 'GAN mode' meaning that mean squared error loss or GAN loss was used for coding.

An object map (at pixel or block level) may also be transmitted by the encoder to indicate which loss function was used for which spatial region for one or both of the first and second layers.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

**Claims**

1. A method for encoding a video signal (x), the method comprising:

   receiving encoding instructions (1302) for encoding the video signal;
   encoding the video signal using a training loop for optimizing a metric of the encoded video signal, wherein the training loop comprises a loss function (L) and one or more of a neural encoder (f) and a neural decoder (g); and
   adapting the training loop based on the encoding instructions.

2. The method of claim 1, wherein the encoding instructions comprise the metric for the training loop to optimize.

3. The method of claims 1 or 2, wherein the encoding instructions comprise structure information of the neural decoder and/or the neural encoder.

4. The method of any of claims 1 to 3, wherein the training loop comprises the neural decoder and the encoding instructions comprises decoder coefficients ($c_g$) for the neural decoder.

5. The method of any of claims 1 to 4, wherein the training loop comprises the neural encoder and the encoding instructions comprises encoder coefficients ($c_f$) for the neural encoder.

6. The method of any of claims 1 to 5, wherein the encoding instructions comprises tunable control parameters for the loss function.

7. The method of any of claims 1 to 6, wherein the metric comprises one of a realism measure, a distortion measure (q), a color accuracy measure, a rate measure (r) or an object detection accuracy measure.

8. The method of any of claims 1 to 7, wherein:

   the video signal is a layered video signal with a first layer ($x_A$) and a second layer ($x_B$);
   the second layer is dependent on the first layer; and
   encoding the video signal comprises encoding the first layer and the second layer, wherein:

   at least one of the first layer and the second layer are encoded using neural coding, and the first layer is encoded using a first loss function for optimizing a first metric and the second layer is encoded using a second, different, loss function for optimizing a second metric.

9. A method for decoding an encoded video signal (y), the method comprising:

   transmitting encoding instructions (1302) to an encoder;
   receiving the encoded video signal, encoded based on the encoding instructions and a training loop comprising a neural decoder (g);
   receiving decoding parameters for decoding the encoded video signal; and
   decoding the encoded video signal using the neural decoder and the decoding parameters.

10. The method of claim 9, wherein the encoding instructions are based on a viewing position and/or viewing orientation of a user.

11. The method of claims 9 or 10, wherein the encoding instructions are based on a user-induced zoom-in or zoom-out.

12. The method of any of claims 9 to 11, wherein transmitting the encoding instructions is triggered by one or more of:

   a change in viewing position;
   a change in viewing orientation;
   a user-induced zoom-in; and
   a user induced zoom-out.

13. The method of any of claims 9 to 12, wherein the encoding instructions comprise one or more of:

   structure information of the neural decoder and/or a neural encoder in the training loop;
   a metric for the training loop to optimize;
   encoding coefficients ($c_f$) of the neural encoder;
   decoder coefficients ($c_g$) of the neural decoder; and
   tunable control parameters for a loss function in the training loop.

14. A computer program carrier comprising computer program code which, when executed on a processing system, causes the processing system to perform all of the steps of the method according to any of claims 1 to 8 and/or according to the method according to any of claims 9 to 13.

15. A processing system configured to read the computer program code in the computer program carrier of claim 14 and execute the computer program code.

Fig.1

Fig.2

Fig.3

Fig.4

Fig.5

Fig.6

Fig.7

Fig.8

Fig.9

Fig.10

Fig.11

Fig.12

Fig.13

Europäisches
Patentamt

European
Patent Office

Office européen
des brevets

**EUROPEAN SEARCH REPORT**

Application Number

EP 22 21 4387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIA CHUANMIN ET AL: "Layered Image Compression Using Scalable Auto-Encoder", 2019 IEEE CONFERENCE ON MULTIMEDIA INFORMATION PROCESSING AND RETRIEVAL (MIPR), IEEE, 28 March 2019 (2019-03-28), pages 431-436, XP033541064, DOI: 10.1109/MIPR.2019.00087 [retrieved on 2019-04-22] * abstract; figure 1 * * section II * | 1-15 | INV. H04N19/30 H04N21/81 H04N21/2343 H04N21/218 H04N21/6379 G06N3/045 |
| X | US 2021/218997 A1 (REZAZADEGAN TAVAKOLI HAMED [FI] ET AL) 15 July 2021 (2021-07-15) * paragraph [0142] – paragraph [0156]; figure 10 * | 1-15 | |
| A | WO 2022/224113 A1 (NOKIA TECHNOLOGIES OY [FI]) 27 October 2022 (2022-10-27) * paragraph [0227] – paragraph [0229]; figure 10 * * paragraph [0261] – paragraph [0301] * | 1-15 | TECHNICAL FIELDS SEARCHED (IPC) |
| A | WO 2022/098727 A1 (VID SCALE INC [US]) 12 May 2022 (2022-05-12) * abstract; figures 3,4, 5, 6 * * page 5 * * page 9 – page 10 * | 1-15 | H04N G06N |
| A | WO 2019/197715 A1 (NOKIA TECHNOLOGIES OY [FI]) 17 October 2019 (2019-10-17) * paragraph [0148] – paragraph [0161] * | 1-15 | |

The present search report has been drawn up for all claims

| Place of search | Date of completion of the search | Examiner |
|---|---|---|
| Munich | 5 May 2023 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 4387

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2023

| Patent document cited in search report | | Publication date | Patent family member(s) | | Publication date |
|---|---|---|---|---|---|
| US 2021218997 | A1 | 15-07-2021 | EP | 4088454 A1 | 16-11-2022 |
| | | | US | 2021218997 A1 | 15-07-2021 |
| | | | WO | 2021140273 A1 | 15-07-2021 |
| WO 2022224113 | A1 | 27-10-2022 | NONE | | |
| WO 2022098727 | A1 | 12-05-2022 | NONE | | |
| WO 2019197715 | A1 | 17-10-2019 | EP | 3777195 A1 | 17-02-2021 |
| | | | WO | 2019197715 A1 | 17-10-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F MENTZER.** Neural Video Compression using GANs for Detail Synthesis and Propagation. *arXiv:2107.12038,* 23 November 2021